# EUROPÄISCHE PATENTSCHRIFT

(11) **EP 2 099 608 B1**
(45) Veröffentlichungstag und Bekanntmachung des Hinweises auf die Patenterteilung: **11.01.2012**
(21) Anmeldenummer: 07765240.2
(22) Anmeldetag: 20.07.2007
(51) Int. Cl.: B32B 5/26, B32B 27/32, A41D 31/02

(54) **MEHRLAGIGES VERBUNDMATERIAL AUS EINER VIERSCHICHTIGEN TEXTILIE**
MULTI-LAYER COMPOSITE MATERIAL MADE OF A FOUR-LAYERED TEXTILE
MATÉRIAU COMPOSITE MULTICOUCHE CONSTITUÉ D'UNE MATIÈRE TEXTILE À QUATRE COUCHES

(30) Priorität: 01.12.2006 DE 102006057139
(43) Veröffentlichungstag der Anmeldung: 16.09.2009
(73) Patentinhaber: Innovatec Microfibre Technology GmbH & Co.KG, 53840 Troisdorf (DE)
(72) Erfinder: FISCHER, Heinz-Jörg, 45481 Mülheim (DE)
(74) Vertreter: Methling, Frank-Oliver
(86) Internationale Anmeldenummer: PCT/EP2007/006458
(87) Internationale Veröffentlichungsnummer: WO 2008/064726

(56) Entgegenhaltungen:
- WO-A-01/50896
- WO-A-03/097352
- DE-A1- 10 318 351

## Beschreibung

Die Erfindung betrifft ein mehrlagiges Verbundmaterial, insbesondere eine Unterspannbahn und/oder Schalungsbahn, aus einer vierschichtig aufgebauten Textilie, wobei zwei Schichten von einem Spinnvlies gebildet sind, von denen eines die Unterseite des Verbundmaterials bildet, eine mittlere Schicht ein mikrofeines, hochdichtes aber wasserdampfdurchlässiges Meltblown ist, das derartig hydrophil ausgerüstet ist, dass seine Flüssigkeitsaufnahmefähigkeit ein Vielfaches des eigenen Gewichtes beträgt, und eine Schicht eine mikroporöse Folie ist.

Die Erfindung betrifft darüber hinaus ein Verfahren zum Herstellen einer vierschichtigen Textilie für Unterspann- und Schalungsbahnen der vorbezeichneten, erfindungsgemäß weitergebildeten Textilie.

Ein gattungsgemäßes Verbundmaterial wird von der DE 103 18 351.5 beschrieben. Die dort beschriebene Schutzbekleidung besteht aus einer vierlagigen Textilie. Eine innere Lage wird von einem Polypropylen-Spinnvlies gebildet. Auf dieser inneren Lage ist eine mikrofeine, hochdichte aber wasserdampfundurchlässige Meltblownschicht aufgebracht. Auf dieser zweiten Schicht ist eine weitere Polypropylen-Spinnvliesschicht aufgebracht, so dass das hydrophil ausgerüstete Meltblown zwischen zwei Polypropylen-Spinnvliesen liegt. Kleidungsaußenseitig ist eine mikroporöse Folie aus Polypropylen oder Polyethylen vorgesehen. Die mikroporöse Außenschicht macht die Schutzbekleidung flüssigkeits- und insbesondere wasserdicht. Sie ist aber gleichwohl wasserdämpfdurchlässig. Die hydrophile Mittelschicht dient der Aufnahme von Wasserdampf. Sie kann ein Vielfaches ihres Eigengewichtes an Wasserdampf aufnehmen.

Die nicht vorveröffentlichte DE 10 2004 042 836 beschreibt eine Schutzbekleidung aus einem dreischichtigen Aufbau, wobei das Meltblown unmittelbar zwischen einem Spinnvlies und einer mikroporösen Folie angeordnet ist.

Aus der EP 0 824 324 B1 ist ein flüssigkeitsverteilendes Kleidungsstück, welches unter einer undurchlässigen Schutzkleidung getragen wird, vorbekannt. Diese Unterbekleidung hat einen mehrschichtigen Aufbau. Unter anderem weist sie einen hydrophil umgewandelten Verstärkungsstoff auf. Darüber hinaus besitzt diese Textilie einen saugfähigen Vliesstoff. Vorgesehen ist ferner ein supersaugfähiger Absorber zur Aufnahme von Flüssigkeit.

Die EP 0 541 206 B1 beschreibt einen Textilverbundstoff, wobei eine innere Textilschicht hydrophil ausgerüstet ist.

Die EP 0 690 163 befasst sich mit einer Schutzkleidung, deren Oberseite und Unterseite aus einem Vlies hergestellt ist. Zwischen den beiden Vliesschichten soll ein Meltblown-Vlies angeordnet sein.

Ausgehend von der eingangs genannten DE 103 18 351 liegt der Erfindung die Aufgabe zugrunde, die Eigenschaften mehrlagigen Verbundmaterials und die Fertigung der Textilie zu verbessern, insbesondere eine Anwendung und Verwendung des mehrlagigen Verbundmaterials für Unterspann- und Schalungsbahnen zu ermöglichen.

Gelöst wird die Aufgabe durch die in den Ansprüchen angegebene Erfindung, wobei jeder Anspruch eine eigenständige Lösung der Aufgabe darstellt und jeder Anspruch mit jedwedem anderen Anspruch kombinierbar ist.

Der Anspruch 1 sieht zunächst und im wesentlichen vor, dass sowohl erste Außenseite bzw. Unterseite als auch die gegenüberliegende zweite Außenseite bzw. Oberseite des mehrlagigen Verbundmaterials jeweils von einem Spinnvlies gebildet werden. Das Meltblown ist dabei unmittelbar angrenzend an das erste, untere Spinnvlies und die mikroporöse Folie unmittelbar angrenzend an das zweite, obere Spinnvlies angeordnet. Das Meltblown ist hochabsorbierend. Es ist in der bewährten Weise derart hydrophil ausgerüstet, dass seine Flüssigkeitsaufnahmefähigkeit ein Vielfaches des eigenen Gewichtes und vorzugsweise mehr als 500 % des eigenen Gewichtes beträgt. Die Faserstärke des Meltblowns beträgt vorzugsweise 0,5 bis 6 µm. Zwischen dem Meltblown und dem zweiten Spinnvlies befindet sich eine mikroporöse Folie. Diese mikroporöse Folie ist wasserdampfdurchlässig aber wasserdicht, so dass sie eine Schutzbarriere gegen Flüssigkeiten ausbildet. Flüssigkeit bzw. Wasserdampf kann durch die erste Vliesschicht hindurchdringen. Die Faserstärke dieser Vliesschicht beträgt 10 bis 20 µm, bevorzugt 15 µm. Wasser, das als Dampf oder als Flüssigkeit durch diese Schicht hindurchtritt, wird vom Meltblown aufgesaugt. Die Flüssigkeit wird dort zwischengespeichert. Das Meltblown ist derart hydrophil ausgerüstet, dass es mehr als 100 %, 200 %, 300 %, 400 %, 500 %, 600 %, 700 % oder 800 % des eigenen Gewichts an Wasser zwischenspeichern kann.

Beansprucht wird ein mehrlagiges Verbundmaterial gemäß den Ansprüchen, insbesondere eine mehrlagige Unterspann- und Schalungsbahn für Dachkonstruktionen, ausgenommen Schutzbekleidung.

Das zwischengespeicherte Wasser wird kontrolliert an die Außenumgebung abgegeben. Dies erfolgt durch die mikroporöse Folie hindurch. Die mikroporöse Folie ist außenseitig mit einer zweiten Spinnvlieslage beschichtet, wobei auch hier die Faserstärke zwischen 10 µm und 20 µm beträgt und vorzugsweise bei 15 µm liegt. Die hydrophile Ausrüstung des Meltblown geschieht über master batches. Es handelt sich hierbei um ein Additiv in Granulatform, welches dem das Meltblown bildende Granulat beigegeben wird. Bevorzugt handelt es sich hier um langkettige Seifen.

Die Orientierung unten - oben des Verbundmaterials kann nach Einsatzgebiet des Materials gewählt werden und ist beliebig. Die Angaben unten und oben dienen nur der Erläuterung des schichtweisen Aufbaus des Verbundmaterials.

In einer bevorzugten Ausgestaltung der Erfindung bestehen alle Schichten aus dem gleichen Material. Vorzugsweise bestehen alle Schichten aus Polypropylen. Polypropylen besitzt einen verhältnismäßig engen Temperaturbereich, in welchem es zu schmelzen beginnt. Die Schmelztemperatur beträgt etwa 160° ± 2°.

Die Fertigung einer Textilie für das mehrlagige Verbundmaterial erfolgt vorzugsweise im Wege des Kalandrierens. Dabei werden die vier Lagen, Spinnvlies, hydrophil ausgerüstetes Meltblown aus Mikrofasern, mikroporöse Folie und Spinnvlies aufeinanderliegend einem Walzenkalander zugeführt. Die beiden Walzen des Kalanders sind temperiert. Zumindest eine der beiden Walzen des Kalanders ist auf die Schmelztemperatur, etwa 160°, temperiert. Indem das feine, das Meltblown ausbildende Fasermaterial innen liegt, kann es durch die durch das Spinnvlies hindurchtretende Wärme angeschmolzen werden. Die angeschmolzenen feinen Mikrofasern des Meltblown können so an die mikroporöse Folie anschmelzen. Die vier Lagen können im wesentlichen unverbunden dem Kalander zugeführt werden.

Es ist aber auch möglich, das Meltblown auf das Spinnvlies aufzusprühen. In gleicher Weise kann auch die mikroporöse Folie zunächst mit dem der Außenseite des Verbundmaterials zuzuordnenden Spinnvlies verbunden werden. Diese beiden unterschiedlichen Doppellagen können dann dem Kalander zugeführt werden, wobei dann lediglich die dem Meltblown zugewandte Kalanderwalze auf 160° C temperiert zu werden braucht. Die andere Walze kann kälter sein, sie kann beispielsweise nur eine Temperatur von 120° C besitzen. Es ist aber auch möglich, beide Kalanderwalzen auf derselben Temperatur, die der Schmelztemperatur des Polypropylen entspricht, zu halten.

Die Wasserdampfdurchlässigkeit der mikroporösen Folie kann durch eine Mikroperforierung erreicht werden. Hierzu wird die extrudierte Folie axial oder biaxial gereckt. Zufolge beispielsweise einer Calciumbicarbonatfüllung entstehen dabei bis 70 % kleine Poren in der Folie, die Wasser nicht durchlassen, wohl aber Wasserdampf.

Das Kalandrierverfahren eignet sich unter anderem deshalb besonders, da die Wärme durch die relativ dicken Fasern des Spinnvlieses hindurchtritt, ohne diese vollständig zu schmelzen. Die Wärme, die das Spinnvlies durchtreten hat, gelangt in das Meltblown, deren relativ dünne Fasern schneller schmelzen, so dass sie sich im Wege eines Anschmelzens mit der mikroporösen Folie verbinden können. Sie können sich bei diesem Vorgang auch mit den relativ dicken Fasern des Spinnvlieses verbinden. Die Temperatur der der mikroporösen Folie zugewandten Walze kann derart gewählt werden, dass sich das dort äußere Spinnvlies im Wege des Anschmelzens der Fasern mit der mikroporösen Folie verbindet.

## Patentansprüche

1. Mehrlagiges Verbundmaterial, insbesondere Unterspannbahn und/oder Schalungsbahn, aus einer vierschichtig aufgebauten Textilie, wobei zwei Schichten durch Spinnvlies, gebildet sind, von denen die erste Spinnvliesschicht die erste Außenseite oder Unterseite des Verbundmaterials bildet, eine mittlere Schicht ein mikrofeines, hochdichtes aber wasserdampfdurchlässiges Meltblown ist, das derartig hydrophil ausgerüstet ist, dass seine Flüssigkeitsaufnahmefähigkeit ein Vielfaches des eigenen Gewichtes beträgt, und eine Schicht eine mikroporöse Folie ist, **dadurch gekennzeichnet , dass** auch die gegenüberliegende zweite Außenseite oder Oberseite des Verbundmaterials von einer zweiten Spinnvliesschicht gebildet ist, wobei das Meltblown unmittelbar zwischen erster Spinnvliesschicht und mikroporöser Folie angeordnet ist und dass die Flüssigkeitsaufnahmefähigkeit des Meltblown mindestens mehr als 100 %, 200 %, 300 %, 400 %, bevorzugt 500 % des eigenen Gewichtes beträgt.

2. Verbundmaterial nach Anspruch 1,**dadurch gekennzeichnet, dass** die hydrophile Ausrüstung im Wege einer Granulatbeimischung insbesondere in Form langkettiger Seifen oder der Sprühausrüstung mit einer geeigneten Chemikalie erfolgt.

3. Verbundmaterial nach Anspruch 1 oder 2, **dadurch gekennzeichnet, dass** die von dem Meltblown aufgenommene Feuchtigkeit kontrolliert über die äußere mikroporöse Folie an die Umgebung abgebbar ist.

4. Verbundmaterial nach einem der vorangehenden, **dadurch gekennzeichnet, dass** alle Schichten aus Polypropylen bestehen.

5. Verbundmaterial nach einem der vorangehenden Ansprüche, **dadurch gekennzeichnet, dass** die Faserstärke des Spinnvlieses zwischen 10 und 15 µm beträgt.

6. Verbundmaterial nach einem oder mehreren der vorangehenden Ansprüche, **dadurch gekennzeichet**, dass das Meltblown auf das Spinnvlies aufgesprüht ist.

7. Verbundmaterial nach einem der vorangehenden Ansprüche, **dadurch gekennzeichnet, dass** das Meltblown eine Faserstärke zwischen 2 und 4 µm besitzt.

8. Verwendung eines mehrlagigen Verbundmaterials nach einem der vorangehenden Ansprüche als Unterspannbahn und/oder Schalungsbahn.

9. Verfahren zur Herstellung einer Unterspannbahn und/oder Schalungsbahn aus einer vierschichtigen Textilie mit den Lagen:
- Spinnvlies,
- hydrophil ausgerüstetes Meltblown aus Mikrofasern,
- mikroporöse Folie,
- Spinnvlies,
welche aus Polypropylen bestehen, wobei die Lagen bei einer Temperatur von etwa 160° C derart zwischen zwei Walzen kalandriert werden, dass sich das Meltblown mit der mikroporösen Folie durch Anschmelzen der Mikrofasern verbindet.

10. Verfahren nach Anspruch 9, **dadurch gekennzeichnet, dass** die vier Lagen im wesentlichen unverbunden dem Kalander zugeführt werden.

11. Verfahren nach einem der Ansprüche 9 oder 10, **dadurch gekennzeichnet, dass** der Kalander ein Zweiwalzenkalander ist, wobei die Walzen unterschiedliche Temperaturen aufweisen.

12. Verfahren nach einem der Ansprüche 9 bis 11, **dadurch gekennzeichnet, dass** nur die dem Meltblown zugewandte Walze eine Temperatur von etwa 160° C besitzt und die der mikroporösen Folie zugewandte Walze eine niedrigere Temperatur aufweist.

13. Verfahren nach einem der Ansprüche 9 bis 12, **dadurch gekennzeichnet, dass** die Faserstärke des Spinnvlieses mindestens 5 mal größer ist als die Faserstärke der Mikrofasern.

## Claims

1. Multi-layer composite material, in particular a sarking membrane and/or cladding membrane, consisting of a textile constructed in four layers, two layers being formed by spunbonded fabric, of which the first spunbonded fabric layer forms the first outer side or underside of the composite material, a middle layer is a meltblown, which is micro-fine and high-density yet permeable to water vapour and is treated so as to be hydrophilic in such a way that the liquid absorbency thereof is a multiple of the inherent weight, and one layer is a microporous film, **characterised in that** the opposing, second outer side or upper side of the composite material is also formed by a second spunbonded fabric layer, the meltblown being arranged directly between the first spunbonded fabric layer and microporous film, and **in that** the liquid absorbency of the meltblown is more than 100%, 200%, 300%, 400%, preferably 500% of the inherent weight.

2. Composite material according to claim 1, **characterised in that** the hydrophilic treatment is provided by way of an addition of granules, in particular in the form of long-chain soaps, or by way of spray treatment with a suitable chemical.

3. Composite material according to either claim 1 or claim 2, **characterised in that** the moisture absorbed by the meltblown can be released into the environment in a controlled manner via the outer microporous film.

4. Composite material according to any one of the preceding claims, **characterised in that** all of the layers consist of polypropylene.

5. Composite material according to any one of the preceding claims, **characterised in that** the fibre thickness of the spunbonded fabric is between 10 and 15 µm.

6. Composite material according to one or more of the preceding claims, **characterised in that** the meltblown is sprayed onto the spunbonded fabric

7. Composite material according to any one of the preceding claims, **characterised in that** the meltblown has a fibre thickness of between 2 and 4 µm.

8. Use of a multi-layer composite material according to any one of the preceding claims as a sarking membrane and/or cladding membrane.

9. Method for the production of a sarking membrane and/or cladding membrane consisting of a four-layer textile having the layers:
- spunbonded fabric
- hydrophilically treated meltblown consisting of microfibres
- microporous film
- spunbonded fabric,
which consist of polypropylene, the layers being calendered between two rollers at a temperature of approximately 160 °C, in such a way that the meltblown bonds to the microporous film by fusion of the microfibres.

10. Method according to claim 9, **characterised in that** the four layers are introduced to the calender substantially unbonded.

11. Method according to either claim 9 or claim 10, **characterised in that** the calender is a two-roller calender, the rollers being at different temperatures.

12. Method according to any one of claims 9 to 11, **characterised in that** only the roller facing the meltblown is at a temperature of approximately 160 °C, and the roller facing the microporous film is at a lower temperature.

13. Method according to any one of claims 9 to 12, **characterised in that** the fibre thickness of the spunbonded fabric is at least 5 times greater than the fibre thickness of the microfibres.

## Revendications

1. Matériau composite multicouche, en particulier bande de sous-toiture et/ou bande de coffrage, constitué d'un textile à quatre couches, dans lequel deux couches sont formées par un non-tissé, dont la première couche de non-tissé forme la première face externe ou face inférieure du matériau composite, une couche centrale est un textile microfin obtenu par extrusion-soufflage, très dense, mais perméable à la vapeur d'eau, qui a reçu un apprêt hydrophile de sorte que sa capacité d'absorption de liquide soit plusieurs fois son propre poids, et une couche est une feuille microporeuse, **caractérisé en ce que** la seconde face externe opposée ou face supérieure du matériau composite est également formée d'une seconde couche de non-tissé, le textile obtenu par extrusion-soufflage étant disposé directement entre la première couche de non-tissé et la feuille microporeuse, et **en ce que** la capacité d'absorption de liquide du textile obtenu par extrusion-soufflage est au moins supérieure à 100 %, 200 %, 300 %, 400 %, de préférence 500 %, de son propre poids.

2. Matériau composite selon la revendication 1, **caractérisé en ce que** l'apprêtage hydrophile s'effectue au cours d'une addition de granulés, en particulier sous la forme de savons à chaîne longue, ou de l'apprêtage par pulvérisation avec un produit chimique approprié.

3. Matériau composite selon la revendication 1 ou 2, **caractérisé en ce que** l'humidité absorbée par le textile obtenu par extrusion-soufflage peut être dégagée à l'environnement de manière contrôlée à travers la feuille microporeuse externe.

4. Matériau composite selon l'une quelconque des revendications précédentes, **caractérisé en ce que** toutes les couches sont constituées de polypropylène.

5. Matériau composite selon l'une quelconque des revendications précédentes, **caractérisé en ce que** l'épaisseur de fibres du non-tissé est comprise entre 10 et 15 µm.

6. Matériau composite selon l'une quelconque ou plusieurs des revendications précédentes, **caractérisé en ce que** le textile obtenu par extrusion-soufflage est pulvérisé sur le non-tissé.

7. Matériau composite selon l'une quelconque des revendications précédentes, **caractérisé en ce que** le textile obtenu par extrusion-soufflage possède une épaisseur de fibres comprise entre 2 et 4 µm.

8. Utilisation d'un matériau composite multicouche selon l'une quelconque des revendications précédentes comme bande de sous-toiture et/ou bande de coffrage.

9. Procédé de fabrication d'une bande de sous-toiture et/ou d'une bande de coffrage constituée(s) d'un textile à quatre couches avec les couches suivantes :
- un non-tissé,
- un textile à apprêt hydrophile obtenu par extrusion-soufflage et constitué de microfibres,
- une feuille microporeuse,
- un non-tissé,
qui sont constituées de polypropylène, dans lequel les couches sont calandrées entre deux rouleaux à une température d'environ 160 °C de sorte que le textile obtenu par extrusion-soufflage soit relié à la feuille microporeuse par fusion des microfibres,

10. Procédé selon la revendication 9, **caractérisé en ce que** les quatre couches sont acheminées à la calandre alors qu'elles ne sont sensiblement pas liées.

11. Procédé selon l'une quelconque des revendications 9 ou 10, **caractérisé**
**en ce que** la calandre est une calandre à deux rouleaux, dans lequel les rouleaux présentent des températures différentes.

12. Procédé selon l'une quelconque des revendications 9 à 11, **caractérisé**
**en ce que** seul le rouleau tourné vers le textile obtenu par extrusion-soufflage possède une température d'environ 160 °C et le rouleau tourné vers la feuille microporeuse présente une température plus basse.

13. Procédé selon l'une quelconque des revendications 9 à 12, **caractérisé**
**en ce que** l'épaisseur de fibres du non-tissé est au moins 5 fois supérieure à l'épaisseur des microfibres.
